# EUROPEAN PATENT APPLICATION

(11) **EP 3 588 469 A1**
(43) Date of publication of application: **01.01.2020**
(21) Application number: 18179801.8
(22) Date of filing: 26.06.2018
(51) Int. Cl.: G09B 5/12, G09B 19/00, G09B 19/24, G06Q 10/06, G06Q 10/00

(54) **METHOD AND SYSTEM FOR SHARING AUTOMATICALLY PROCEDURAL KNOWLEDGE**

(71) Applicant: Siemens Aktiengesellschaft, 80333 München (DE)
(72) Inventor: Johnson, Rebecca, 81739 München (DE); MacWilliams, Asa, 82256 Fürstenfeldbruck (DE)

(57) **Abstract**

A system (1) for sharing automatically procedural knowledge between domain experts (E) of a technical domain and trainees (T), said system comprising: at least one server (4) connected via a communication network (2) to computing devices (3) of the domain experts (E) and the computing devices (3) of the trainees (T), wherein computing devices (3) of the domain experts (E) are adapted to provide the server (4) with observations of the domain experts (E) while performing a procedure in the technical domain, wherein the received observations are evaluated by the server (4) to generate automatically instructions for the trainees (T) supplied to computing devices (3) worn by the trainees (T) while performing the respective procedure.

## Description

The invention relates to a method and system for sharing automatically procedural knowledge between domain experts of a technical domain and trainees.

In many applications users have to perform procedural steps in a procedure to be performed in a technical domain. For example, field service technicians have to maintain and/or repair a specific machine within a manufacturing facility. Another example is a medical expert having expertise how to perform a specific operation during surgery and wishes to share this knowledge with colleagues. Another doctor in a similar situation faced with surgical operation needs information how to proceed from another expert.

Sharing of procedural knowledge is conventionally done within teaching sessions where a domain expert demonstrates the procedure to a trainee or group of trainees. The domain expert may use instruction manuals or instruction videos.

The conventional approach of training trainees for technical procedures has several drawbacks. The domain expert having expert knowledge or expertise concerning the respective technical procedure can only teach or train a limited number of trainees at a time. Further, domain expert has to invest resources, in particular time for training other persons requiring training. Further, some domain experts may find it difficult to explain technical details to trainees because they are deemed to be trivial or self-evident to the domain expert, thus making it difficult to train the trainees efficiently. Moreover, there can be language barriers between the training domain expert and the trained novices having less experience in the technical field.

Accordingly, it is an object of the present invention to provide a method and a system which increases the efficiency of sharing procedural knowledge between domain experts of a technical domain and trainees.

This object is achieved according to a first aspect of the present invention by a system for sharing automatically procedural knowledge comprising the features of claim 1.

The invention provides according to the first aspect a system for sharing automatically procedural knowledge between domain experts of a technical domain and trainees,
said system comprising:
at least one server connected via a communication network to computing devices of the domain experts and to computing devices of the trainees,
wherein computing devices of the domain experts are adapted to provide the server with observations of the domain experts while performing a procedure in the technical domain,
wherein the received observations are evaluated by the server to generate automatically instructions for the trainees supplied to the computing devices worn by the trainees while performing the respective procedure.

In a possible embodiment of the system according to the first aspect of the present invention the server comprises a virtual assistant adapted to interact with the domain expert and/or trainee while performing the procedure in the technical domain to trigger observations of the actions and/or comments of the respective domain expert and/or trainee.

In a possible embodiment of the system according to the first aspect of the present invention the virtual assistant implemented on the server or computing device comprises an autonomous agent adapted to perform autonomously dialogues with the domain experts and/or trainees while performing the procedure in the technical domain to trigger actions and/or comments of the respective domain experts and/or trainees recorded by their computing devices and supplied to the server via the communication network of the system.

In a still further possible embodiment of the system according to the first aspect of the present invention the procedure context of a procedure performed by a domain expert or trainee is retrieved automatically by the computing device worn by the respective domain expert or trainee and supplied to the server via the communication network.

In a further possible embodiment of the system according to the first aspect of the present invention the procedure context retrieved by the computing device comprises machine data of a machine serviced by the respective domain expert or trainee in the respective procedure.

In a still further possible embodiment of the system according to the first aspect of the present invention the actions and/or comments of a domain expert or trainee recorded by its computing device during the procedure comprise audio data and/or video data which are evaluated automatically along with the procedure context of the procedure by the autonomous agent of the server to provide a dialogue with the respective domain expert and/or trainee and/or to give a feedback to the respective domain expert or trainee via its computing device.

In a still further possible embodiment of the system according to the first aspect of the present invention the server comprises a database adapted to store audio data and/or video data recorded for a plurality of domain experts and/or trainees along with associated procedure context data.

In a still further possible embodiment of the system according to the first aspect of the present invention the actions and/or comments recorded by the computing device of a domain expert or trainee in a selected operation mode while performing procedure steps of a procedure in the technical domain comprise audio data and/or video data tagged with labels associated with the respective procedure steps and/or the selected operation mode.

In a further possible embodiment of the system according to the first aspect of the present invention the labels associated with the respective procedure steps of a procedure are generated automatically on the basis of specific actions and/or comments of the domain expert or trainee while performing the procedure in the technical domain and/or on the basis of the procedure context of the procedure.

In a further possible embodiment of the system according to the first aspect of the present invention the server comprises a processing unit adapted to extract relevant audio data and/or video data of procedure steps stored in the database on the basis of the associated labels and/or on the basis of the procedure context to generate a training and/or guiding sequence for a procedure to be performed by a trainee including the extracted audio data and/or extracted video data.

In a further possible embodiment of the system according to the first aspect of the present invention the processing unit of the server comprises an artificial intelligence module adapted to extract relevant audio data and/or video data of procedure steps stored in the database automatically on the basis of the associated labels and/or procedure context to generate the training and/or guiding sequence.

In a still further possible embodiment of the system according to the first aspect of the present invention the training or guiding sequence is enriched by the processing unit with instructional data loaded from the database of the system for the respective procedure context.

In a still further possible embodiment of the system according to the first aspect of the present invention the instructional data used to enrich the training and/or guiding sequence comprises data collected from different data sources including documentation data, machine data models, scanned data, recorded audio and/or video data of training and/or guiding sequences previously executed by a domain expert or by a trainee.

In a still further possible embodiment of the system according to the first aspect of the present invention each computing device is operated in selectable operation modes including a teaching mode wherein observations provided by the computing device are tagged automatically as expert observations and a learning mode, wherein observations provided by the computing device are tagged automatically as trainee observations.

The invention further provides according to a second aspect a method for sharing automatically procedural knowledge comprising the features of claim 15.

The invention provides according to the second aspect a method for sharing automatically procedural knowledge between domain experts and trainees,
the method comprising the steps of:
receiving by a server observations made by computing devices of domain experts while performing a procedure in the technical domain;
processing the received observations by the server to generate automatically instructions for the trainees; and
providing by the server computing devices worn by the trainees while performing the respective procedure in the technical domain with the generated instructions.

The invention provides according to a further aspect a method for generating a virtual reality, VR, training session for a procedure to be performed by at least one trainee on a physical object of interest in a technical environment,
the method comprising the steps of:
loading a virtual reality, VR, model of said object of interest from a database into a virtual reality, VR, authoring system,
specifying atomic procedural steps of the respective procedure by a technical expert and performing the specified atomic procedural steps in a virtual environment provided by the virtual reality, VR, authoring system by said technical expert on the loaded virtual reality model of the object of interest and
recording the atomic procedural steps performed by the technical expert in the virtual environment and linking the recorded atomic procedural steps to generate automatically the virtual reality, VR, training session stored in the database and available for the trainees.

In a possible embodiment of the method for generating a virtual reality, VR, training session according to the third aspect of the present invention, each recorded atomic procedural step performed by the technical expert in the three-dimensional virtual environment is enriched with supplementary data selected by the technical expert in the three-dimensional virtual environment provided by said virtual reality, VR, authoring system.

In a further possible embodiment of the method for generating a virtual reality, VR, training session according to the third aspect of the present invention, the supplementary data is imported by said virtual reality, VR, authoring system from different data sources and/or databases and linked to the recorded atomic procedural step.

In a still further possible embodiment of the method for generating a virtual reality, VR, training session according to the third aspect of the present invention, the supplementary data comprises photographs, instruction videos, audio recordings, sketches, slides, text documents and/or instruction manuals.

In a still further possible embodiment of the method for generating a virtual reality, VR, training session according to the third aspect of the present invention, the technical expert performs one or more atomic procedural steps in the three-dimensional virtual environment provided by the virtual reality, VR, authoring system using virtual tools loaded from a database to said virtual reality, VR, authoring system and selected by the technical expert in the three-dimensional virtual environment for performing the respective atomic procedural steps.

In a further possible embodiment of the method for generating a virtual reality, VR, training session according to the third aspect of the present invention, each recorded atomic procedural step of a procedure is linked to at least one previously recorded procedural step of the same procedure by the technical expert in the virtual environment or linked depending on the supplementary data selected by the technical expert for the recorded atomic procedural step.

In a still further possible embodiment of the method for generating a virtual reality, VR, training session according to the third aspect of the present invention, the generated virtual reality, VR, training session stored in the database of said virtual reality, VR, authoring system is made available in a training operation mode to a virtual reality, VR, device of the trainee which displays the atomic procedural steps of the training session to the respective trainee emulating the displayed atomic procedural steps of the training session in the three-dimensional virtual environment provided by the virtual reality, VR, device of the trainee.

In a further possible embodiment of the method for generating a virtual reality, VR, training session according to the third aspect of the present invention, in an examination operation mode, the atomic procedural steps performed by the trainee in the three-dimensional virtual environment provided by its virtual reality, VR, device are recorded and compared automatically with the recorded atomic procedural steps performed by the domain expert in the three-dimensional virtual environment of the virtual reality, VR, authoring system to generate comparison results and a feedback to the trainee indicating whether the trainee has performed the respective atomic procedural steps correctly or not.

In a still further possible embodiment of the method for generating a virtual reality, VR, training session according to the third aspect of the present invention, the comparison results are stored and evaluated to analyze a training progress of the trainee.

In a still further possible embodiment of the method for generating a virtual reality, VR, training session according to the third aspect of the present invention, the generated virtual reality, VR, training session stored in the database of said virtual reality, VR, authoring system is made available to an augmented reality, AR, guiding device of a qualified trainee which displays the virtual reality, VR, training session to the trainee who emulates the displayed atomic procedural steps in the technical environment to perform the procedure on the physical object of interest.

In a still further possible embodiment of the method for generating a virtual reality, VR, training session according to the third aspect of the present invention, the virtual reality, VR, model of the object of interest is derived automatically from an available computer-aided design, CAD, model of the physical object of interest or from a scan of the physical .

In a still further possible embodiment of the method for generating a virtual reality, VR, training session according to the third aspect of the present invention, the virtual reality, VR, model of the object of interest is a hierarchical data model representing the hierarchical structure of the physical object of interest consisting of a plurality of components.

In a still further possible embodiment of the method for generating a virtual reality, VR, training session according to the third aspect of the present invention, the atomic procedural step performed by the technical expert or the trainee in the three-dimensional virtual environment comprises a manipulation of at least one displayed virtual component of the object of interest with or without use of a virtual tool, in particular moving the displayed virtual component, removing the displayed virtual component, replacing the displayed virtual component by another virtual component, connecting a virtual component to the displayed virtual component and/or changing the displayed virtual component.

The invention provides according to a further fourth aspect a virtual reality, VR, authoring system for generating a virtual reality, VR, training session for a procedure to be performed by at least one trainee on a physical object of interest, said authoring system comprising a processing unit configured to perform the method according to the third aspect of the present invention.

In the following, possible embodiments of the different aspects of the present invention are described in more detail with reference to the enclosed figures.
- Fig. 1: shows a block diagram for illustrating a possible exemplary embodiment of a system for sharing auto-matically procedural knowledge according to the first aspect of the present invention;
- Fig. 2: shows a flow chart of a possible exemplary embodiment of a method for sharing automatically procedural knowledge according to a second aspect of the present invention;
- Fig. 3: shows an exemplary data structure of a data set as used by the system and method according to the present invention;
- Fig. 4: shows schematically an illustration of a training and/or guiding sequence which can be generated by the method and system according to the present invention;
- Fig. 5: illustrates possible operation of a method and system according to the present invention;
- Fig. 6: illustrates possible operation of the system and method according to the present invention using a virtual reality training authoring system; and
- Fig. 7: shows a flowchart of a possible exemplary embodiment of a method for generating a virtual reality, VR, training session according to an aspect of the present invention.

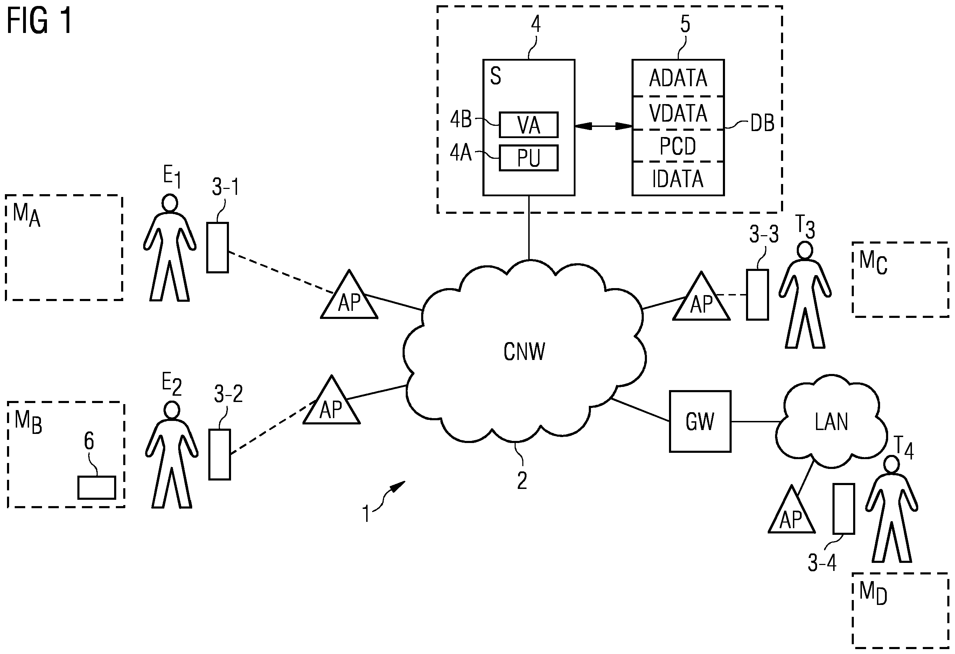

Fig. 1 shows schematically a possible exemplary embodiment of a system 1 for sharing automatically procedural knowledge between domain experts E of a technical domain and trainees T according to the first aspect of the present invention. In the illustrated exemplary embodiment, the system 1 comprises a communication network 2 used for communication between computing devices 3-1, 3-2, 3-3, 3-4 of domain experts E and trainees T. The number of domain experts E and associated portable computing devices 3-i as well as the number of trainees T wearing portable computing devices 3-i can vary depending on the use case. In the illustrated exemplary embodiment the different portable computing devices 3-i can be connected via wireless links to access points AP of the communication network 2 or indirectly via an access point of the local area network and a gateway GW as also illustrated in Fig. 1. The system or platform for sharing automatically procedural knowledge between different domain experts E and trainees T can comprise at least one central server 4 connected to the communication network 2. In the illustrated embodiment of Fig. 1 the server 4 has access to a central database 5 forming a data storage for audio data, video data, procedure context data, PCD as well as instruction data (I data). The different experts E1, E2 as illustrated in Fig. 1 have expertise knowledge concerning the procedure to be performed in a technical domain. This procedure can be for instance a repair procedure or a maintenance procedure of a machine M serviced by the respective expert E. As illustrated in Fig. 1 the machines Mₐ and M_{b} undergo a procedure by a technical expert E performing e.g. procedural steps of a maintenance or repair procedure. The computing devices 3-1, 3-2 of the domain experts E1, E2 are adapted to provide the server 4 of the platform or system 1 with observations of the domain experts E1, E2 while performing the procedure in the technical domain. The observations received by the server 4 are evaluated by a processing unit 4A of the server 4 to generate automatically instructions for the trainees T. The generated instructions can be supplied to the computing devices 3-3, 3-4 worn by the trainees T while performing the respective procedure at other machines M_{c}, M_{d} as illustrated in Fig. 1. In the illustrated embodiment the server comprises a processing unit 4A adapted to process the received observations to generate automatically instructions for the trainees T. Besides the processing unit 4A the server 4 comprises in the illustrated embodiment a virtual assistant 4B adapted to interact with the domain experts E1, E2 and/or with the trainees T3, T4 while performing the respective procedure in the technical domain to trigger or provoke observations, actions and/or comments of the respective domain expert E and/or trainee T. In a possible embodiment, the virtual assistant 4B of the server 4 can comprise an autonomous agent adapted to perform autonomously dialogues with the domain experts E and/or trainees T while performing the procedure in the technical domain to trigger actions and/or to get comments of the respective domain experts E and/or trainees T recorded by their computing devices 3 and supplied to the server 4 via the communication network 2 of the system 1. In a possible embodiment, procedure context data PCD of a procedure performed by a domain expert E or a trainee T is retrieved automatically by the associated computing device 3 worn by the respective domain expert E or trainee T and supplied to the server 4 via the communication network 2. The procedural context data PCD of a procedure retrieved by a computing device 3 can comprise machine data of a machine M serviced by the respective domain expert E or trainee T in the procedure. Actions and/or comments of a domain expert E or a trainee T recorded by its computing device 3-i during the procedure can comprise audio data and/or video data. The audio data and video data can be evaluated automatically by the processing unit 4A along with the procedure context data PCD of the procedure to provide or create a dialogue with the respective domain expert E and/or trainee T. Further, the audio data and/or video data can be evaluated automatically by the processing unit 4A with the procedure context data PCD of the procedure to provide a feedback for the respective domain expert E and/or trainee T via its computing device 3-i.

As illustrated in Fig. 1, the server 4 has access to a database 5 adapted to store audio data and/or video data recorded for a plurality of domain experts E or trainees T along with the associated procedure context data PCD. In a possible embodiment the actions and/or comments recorded by the computing device 3 of a domain expert E or a trainee T in a selected operation mode of its computing device 3 while performing procedural steps of the procedure are tagged with labels L associated with the respective procedure steps and/or selected operation mode. These labels L associated with the respective procedure steps of a procedure can be generated in a possible embodiment by the processing unit 4A automatically on the basis of specific actions and/or comments of the domain expert E or trainee T while performing the procedure in the technical domain and/or on the basis of the procedure context data PCD of the respective procedure.

The processing unit 4A of the server 4 can comprise a processor adapted to extract relevant audio data and/or video data of procedure steps stored in the database 5 on the basis of the associated labels and/or on the basis of the procedure context data to generate a training sequence or a guiding sequence for a procedure to be performed by a trainee T including the extracted audio data and/or extracted video data. The extraction of the relevant audio data and/or video data can be performed in a possible embodiment by an artificial intelligence module implemented in the processing unit 4A. In a possible embodiment the training sequence or guiding sequence can be enriched by the processing unit 4A with instructional data loaded from the database 5 of the system for the respective procedure context. Instructional data can comprise for instance data collected from different data sources including, in particular documentation data from machine data models of a machine M or machine components, scanned data and/or recorded audio and/or video data of training and/or guiding sequences previously executed by a domain expert or trainee. In a possible embodiment each computing device can be operated in different operation modes OM. These selectable operation modes can include in particular a teaching operation mode, T-OM, where observations provided by the computing device 3 are tagged as expert observations and a learning operation mode, L-OM, where observations provided by the computing device 3 are tagged automatically as trainee observations.

The computing devices 3-i carried by the experts E and/or trainees T are in a preferred embodiment portable computing devices which can be carried by the expert or trainee or which are attached to the expert or trainee. This wearable computing devices 3-i can include in a possible exemplary embodiment one or more cameras worn by the user at his head, chest or arms. Wearable computing devices 3 further can comprise a user interface including one or more microphones arranged to record the user's voice. Further, the user interface of the wearable computing device 3 can comprise one or more loudspeakers or headphones. Further, each wearable computing device 3-i comprises a communication unit which allows to set up a communication with the server 4 of the platform 1. Each wearable computing device 3 comprises at least one processor with appropriate application software. The processor of the computing device 3 is connected to the user interface UI of the wearable computing device 3 to receive sensor data, in particular video data from the cameras and/or audio data from the microphones. The computing unit or processor of the wearable computing device 3 is adapted in a possible embodiment to provide observations of the user while performing the procedure in the technical domain and to transmit the observations via the communication interface of the computing device 3 and the communication network 2 to the server 4 of the platform. In a possible embodiment, the computing unit of the device 3-i is adapted to preprocess data received from the cameras and/or microphones to detect relevant actions and/or comments of the user. These actions can include for instance the picking up of a specific tool by the expert E or trainee T during the procedure in the technical domain such as a repair or maintenance procedure. The detection of a relevant action can be performed in a possible exemplary implementation by processing audio comments of the user, i.e. the expert E or a trainee T or by detection of specific gestures on the basis of processed video data.

In a possible embodiment the software agent 4B of the server 4 is adapted to interact with users and can comprise, in particular a chatbot providing a voice based interface to the users. The virtual assistant VA comprising the chatbot can for instance be adapted to interact with the domain expert E and/or trainee T while performing the procedure in the technical field. The virtual assistant VA can comprise a chatbot to perform autonomously a dialogue with the respective user. The dialogue performed between the chatbot and the user can be aligned with actions and/or comments made by the user. For instance, if video data provided by the computing device 3 of the user show that the user picks up a specific tool to perform a procedural step during the maintenance or repair procedure, the chatbot of the virtual assistant VA can generate a question concerning the current action of the user. For instance, the chatbot of the virtual assistant VA can ask a technical expert E a specific question concerning his current action such as "what is the tool you just picked up?". The comment made by the expert E in response to the question can be recorded by the computing device 3 of the expert E and transmitted to the server 4 of the system to be memorized in the database 5 as audio data of a procedural step of the repair or maintenance procedure performed by the expert E. After the expert E has picked up the tool and has answered the question of the chatbot the expert E can start to perform maintenance or repair of the machine. The computing device 3 of the expert E records automatically a video of what the expert is doing along with potential comments made by the expert E during the repair or maintenance action performed with the picked up tool. The actions and/or comments of the domain expert E recorded by its computing device 3, during the procedure can comprise audio data including the expert's comments and/or video data showing the expert's actions which can be evaluated in a possible embodiment by an autonomous agent of the virtual assistant VA to provide or generate dialogue elements output to the expert E to continue with the interactive dialogue. In parallel, procedure context of the procedure performed by the expert E can be retrieved by the computing device 3 worn by the expert and supplied to the server 4 via the communication network 2. These context data can comprise for instance machine data read from a local memory of the machine M which is maintained or repaired by the expert E. In the example illustrated in Fig. 1 the machine M_{b} which is serviced by the domain expert E2 comprises a local memory 6 storing machine data of the machine M_{b} which can be retrieved by the computing device 3-2 of the expert and forwarded to the server 4 of the platform. The context data of the process can for instance indicate a machine type for identification of the machine M_{b} which can be stored in the database as procedure context data PCD. The server 4 can store audio data and/or video data recorded for a procedural step of a procedure along with associated procedure context data PCD in the database 5. In a possible embodiment, these audio data and/or video data can be tagged with labels L associated with the respective procedural step. The labels can be generated automatically by the processing unit 4A on the basis of specific actions and/or comments of the user while performing the procedure in the technical domain. In a possible embodiment, comments made by the user during the procedure can be processed to detect key words which may be used as procedure context data PCD for the respective procedure. The labels and/or tags of audio data and/or video data generated as observations by the computing device 3 of the respective user can be stored as procedure context data PCD for the respective audio data and/or video data along with the audio data and/or video data in the database 5 of the system. The tagging and/or labelling can be performed in a possible embodiment automatically, for instance on the basis of machine data read from a local memory of the machine M. In a further possible embodiment, the tagging can be made by the expert E or user during the procedure by specific comments spoken into a microphone of the user interface UI of the computing device 3 comprising for instance key words for labelling the audio and/or video data provided by the sensors of the computing device of the user. The wearable computing devices 3 of the trainees T can comprise in a possible embodiment an additional display unit worn on the trainee's head to provide the trainee T with a guiding or training sequence regarding the handling of the respective machine.

The chatbot of the virtual assistant VA can also perform a dialogue with the trainee T, for instance to receive questions of the trainee during the procedure such as "which of these tools do I need now?". The virtual assistant VA can play back previously recorded videos of experts E showing what they are doing in a particular situation during a maintenance and/or repair procedure. The virtual assistant VA can further allow the trainee T to provide a feedback to the system how useful a given instruction has been for his purpose.

The database 5 of the platform is adapted to index or tag procedure steps for individual video and/or audio data sequences. The processing unit 4A can comprise in a possible embodiment an artificial intelligence module AIM which is adapted to extract relevant pieces of recorded video and/or audio sequences and to index them according to the comments made by the expert E in a specific situation of the procedure as well as on the basis of the data that are included in the video sequences or audio sequences. The artificial intelligence module AIM can be designed in a possible embodiment to query the database 5 for appropriate video data when a trainee T requires them during a procedure. In a possible embodiment, the server 4 can also send communication messages such as emails to the users and can in a possible embodiment send also rewards to experts E who have shared useful knowledge with trainees T.

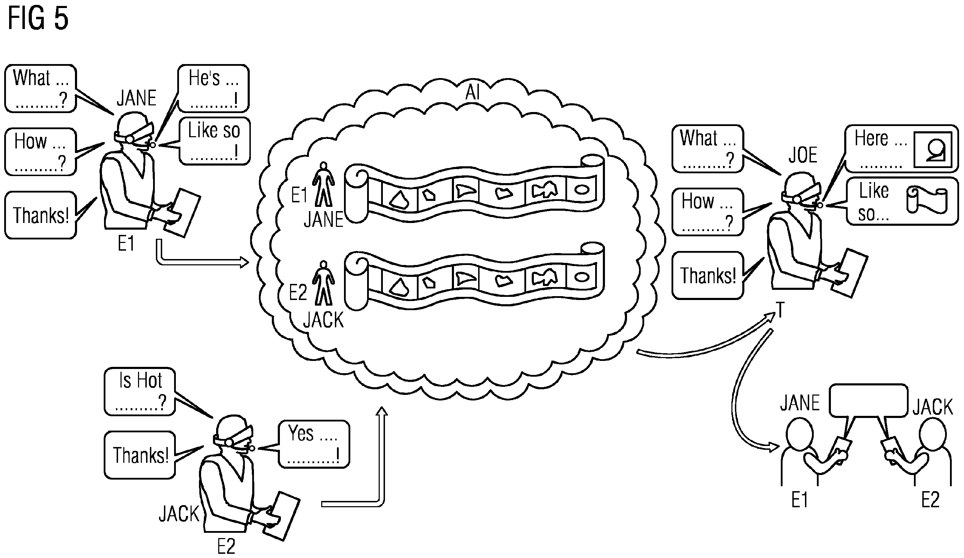

Fig. 5 shows schematically an example illustrating the interaction of the system according to the present invention with users. In the illustrated example two experts "Jane" (E1) and "Jack" (E2) are connected by means of their portable computing devices 3 with the system 1 for sharing automatically procedural knowledge with a trainee "Joe" (T).

A possible dialogue between the experts E and the trainee T can be as follows. First, the first expert "Jane" (E1) is working in a procedure, for instance in a repair or maintenance procedure at a machine Mₐ. During the operation, the actions and/or comments of the domain expert "Jane" (E1) are monitored by its computing device 3-1 to detect interesting actions and/or comments during the procedure. In a possible embodiment, the computing device 3 comprises an integrated virtual assistant VA adapted to interact with the user by performing the procedure which can in a possible implementation also be supported by the virtual assistant VA integrated in a module 4B of the server 4. If the computing device 3 detects that the first expert "Jane" (E1) is performing something interesting the chatbot of the virtual assistant VA can ask the first expert "Jane" (E1) a question.
Computing device 3 of "Jane" (E1): "Excuse me, Jane, what is that tool you've been using?"
Reply of expert "Jane" (E1): "Oh, that's a screwdriver I need to fix the upper left screw of the housing."

The chatbot can then ask via the computing device 3 of the expert "Jane": "Ah, how do you fix the screw in the housing?" which triggers the reply of the technical expert "Jane": "See, like this, right here" while the domain expert performs the action of fixing the screw in the housing of the machine recorded by the camera of its computing device 3. The dialogue can be finalized by the chatbot of the virtual assistant VA as follows "Thank you!"

Later if the second expert "Jack" (E2) is taking a similar machine M apart, the processing unit can continuously evaluate video and/or audio data provided by the computing device to detect procedural steps performed by the expert. In the example, an artificial intelligence module AIM of the processing unit 4A may have learned from the previous recording of the other expert "Jane" (E1) that the video data shows a specific component or element, e.g. the screw previously assembled in the housing of the machine M by the first expert "Jane". After having made this observation the chatbot of the virtual assistant VA can ask the second expert "Jack" (E2) a question as follows: "Excuse me, Jack, is that a screw which you want to use to assemble the housing?" This may trigger the following reply of the second expert "Jack": "Yes, indeed it is ..." The chatbot of the virtual assistant VA can then end the dialogue by thanking the second expert "Jack": "Thank you! "

Later, the trainee T may have the task to fix the housing by assembling the screw and has no knowledge or expertise to proceed as required. The trainee T may ask via its computing device 3 the platform for advice in the following dialogue. The trainee "Joe" may ask: "Ok, artificial intelligence module, please tell me what is this screw that I am supposed to use to fix the housing?" The computing device 3 of the trainee "Joe" can output for example: "It's this thing over here ..."

The same moment the platform show the trainee "Joe" by means of the display of his computing device 3 an image or video recorded previously by the computing device 3 of the second expert "Jack" (E2) with the respective component, i.e. the screw, highlighted. The trainee "Joe" can then ask via its computing device 3 the system the follow-up question: "Ok, and how do I fix it?" gjo?? the reply output by the user interface UI of the computing device 3 of the trainee T: "You can use a screwdriver as shown ..." wherein the display of the trainee "Joe" outputs the video sequence which has been recorded by the computing device 3 of the first expert "Jane". The trainee T can end the dialogue, for instance by the following comment: "Thanks, that helped!"

Finally, both experts "Jack" and "Jane" may receive thanks from the system via an application on their portable computing devices 3. For instance, the portable computing device 3 of the first expert "Jane" (E1) may display the following message; "Thanks from Joe for your help in assembling housing of the machine using a screwdriver!" Also on the computing device 3 of the other expert "Jack" (E2) a thank you-message can be output as follows: "Thanks from Joe on identifying the screw!"

The system according to the present invention can take advantage of an interaction format of chatbot to ask experts E in the technical domain questions. The chatbot of the virtual assistant VA implemented on the portable computing device 3 and/or on the server 4 of the platform may put the expert E into a talkative mood so that the expert E is willing to share expert knowledge. Similarly, the chatbot implemented on the computing device a3 of a trainee T or on the server 4 of the platform, will reduce the trainee's inhibition to ask questions so that the trainee T is more willing to ask for advice. The system 1 can record and play videos on the wearable computing devices 3 so that the trainee T may see video instructions from the same perspective as during the actual procedure. The system 1 can further use audio tracks from recorded videos evaluated or processed to extract index certain elements in the video sequence. Further, the system may provide experts E with rewards for sharing their expert knowledge with trainees T. The system 1 does not require any efforts to explicitly offer instructions. The experts E may share their knowledge when asked by the chatbot without slowing down their work process during the procedure. Accordingly, the observations of the domain experts E can be made during a routine normal procedure of the expert E in the respective technical domain. Accordingly, in the normal routine the expert E can provide knowledge to the system 1 when asked by the chatbot of the virtual assistant VA.

In contrast to conventional platforms, where an expert E explicitly teaches trainees T who may stand watching the system of the present invention can scale indefinitely. While a trainer can only teach two or more trainees at a time, the content recorded and shared by the system 1 can be distributed to an unlimited number of distributed trainees T.

In a possible embodiment, the system 1 can also use contextual data of machines or target devices. For example, the computing device 3 of an expert E can retrieve machine identification data from a local memory of the machine M which the expert E is servicing including, for instance a type of the machine. This information can be stored along with the recorded audio and/or video data in the database 5. Similarly, the computing device 3 of a trainee T can query the machine M that the trainee T is servicing and an artificial intelligence module AIM of the processing unit 4A can then search for video and/or audio data of similar machines.

In another possible embodiment, additional instructional material or data is stored in the database 5, for instance part diagrams or animated 3D data models. For example, the computing device 3 of the trainee T can show a three-dimensional diagram of the machine M being serviced by the trainee T. This three-dimensional diagram can be stored in the database 5 of the system 1 and the trainee T can query for it explicitly so that for example, the artificial intelligence module AIM will suggest it to the trainee T as follows: "may I show you a model of the machine component?" There are several possible mechanisms for providing additional data, in particular additional instructional data that can be linked to the recorded video and/or audio data without explicit annotation. For example, if an expert E looks at a particular three-dimensional data model on his portable computing device 3 when performing a procedure or task, this can be recorded by his portable computing device 3. The same model can then be shown to the trainee T when performing the same task. Further, if each data model comprises a title, a trainee can search for an appropriate data model by voice commands input in the user interface UI of his computing device 3.

In a possible embodiment, the artificial intelligence module AIM implemented in the processing unit 4A of the server 4, can comprise a neural network NN and/or a knowledge graph.

In a possible embodiment, the computing device 3 of a trainee T can also be configured to highlight particular machine parts in an augmented reality, AR, view on the display of the computing device 3 of the trainee. The computing device 3 of the trainee T can include a camera similar to the computing device of an expert E. The computing device 3 of the expert E can detect in a possible embodiment items in the trainee's current view which also appear in a recorded video of the expert E and the computing device 3 of the trainee T can then highlight them if they are relevant.

In a possible embodiment, the computing devices 3 of the trainee T and expert E can be identical in terms of hardware and/or software. In this embodiment they include both cameras and display units. Accordingly, colleagues can use these computing devices to share knowledge symmetrically, i.e. a trainee T in one technical area may be an expert E in another technical area and vice versa.

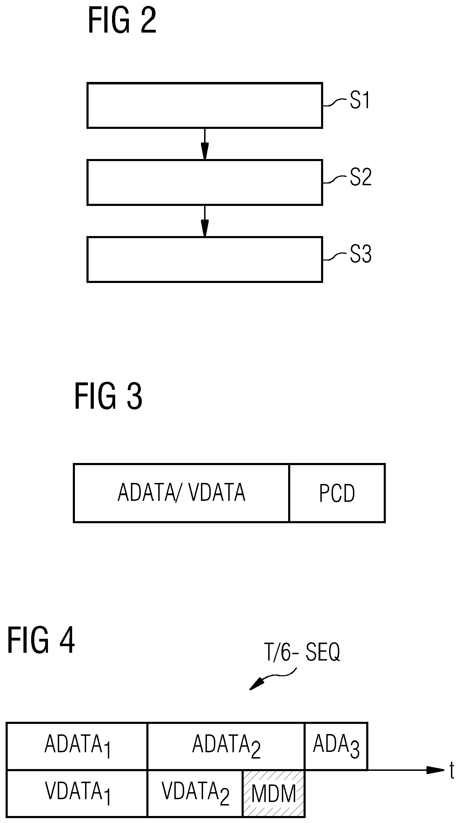

Fig. 2 shows a flowchart of a possible exemplary embodiment of a method for sharing automatically procedural knowledge between domain experts E and trainees T. The method illustrated in Fig. 2 can be performed using a platform as illustrated in Fig. 1.

In a first step S1 the server receives observations made by computing devices of domain experts E by performing a procedure in the technical domain.

In a further step S2 the received observations are processed by the server to generate automatically instructions for trainees T.

In a further step S3 computing devices worn by trainees T while performing the respective procedure in the technical domain are provided by the server with the generated instructions.

Fig. 3 illustrates schematically a possible data structure which may be used by the method and system according to the present invention. Recorded audio data and/or video data will be stored along with procedure context data PCD in the database 5 of the platform. The procedure context data PCD can comprise for instance machine data of the machine M serviced by the respective domain expert E and/or trainee T during a maintenance or repair procedure. Further, the procedure context data PCD can comprise labels L generated during the recording of the audio data and/or video data. The procedure context data PCD can for instance comprise labels L associated with respective procedure steps and/or selected operation modes OM. In a possible embodiment, each computing device 3-i of the platform can be operated in one group of selectable operation modes. These operation modes OM can include in a possible implementation a teaching operation mode T-OM, wherein observations provided by the computing device 3 are tagged automatically as expert observations. Further, the operation mode can comprise a learning operation mode L-OM, where observations provided by the computing device 3 are tagged automatically as trainee observations. These tags or labels can be stored as procedure context data PCD along with the recorded audio data and/or video data. The labels L stored as procedure context data PCD can also be generated in response to comments made by a user during the procedure. Further, the procedure context data PCD can be generated automatically by actions recorded as video data during the procedure, e.g. specific gestures made by the user. The procedure context data PCD can comprise a plurality of further information data generated automatically during the procedure, for instance time stamps indicating when the audio data and/or video data have been recorded, location data indicating the location where the audio data and/or video data have been recorded, as well as user profile data providing information about the user having performed the procedural step within a procedure including information about the level of knowledge of the respective user, in particular whether the user is regarded as an expert E or a trainee T for the respective procedure. Other possible procedure context data PCD may comprise information about the language spoken by the respective user.

Fig. 4 illustrates a training and/or guiding sequence output by the platform using data stored in the database 5 of the platform. The processing unit 4A of the server 4 can be adapted to extract relevant audio data and/or video data of procedure steps stored in the database 5 on the basis of associated procedure context data PCD to generate or assemble a training and/or guiding sequence for a trainee T including the extracted audio data and/or extracted video data. In the illustrated embodiment, recorded audio data and/or recorded video data stored in the database 5 can be output via the computing device 3 of a trainee T according to a dialogue performed between the trainee T and the chatbot of the virtual assistant VA implemented in the computing device 3-i of the trainee T or on the server 4 of the platform. The recorded audio data and video data can be output simultaneously in parallel as different information channels via the display unit of the portable computing device 3 of the trainee T and via the headphones of the user interface of the computing device 3 of the trainee T. In the illustrated example of Fig. 4 first audio data ADATA1 recorded from a first expert E1 may be displayed to the trainee T along with video data showing the actions of this expert E1. The next procedural step within the procedure can be explained to the trainee T by further audio data ADATA2 recorded from a second expert E2 along with video data showing the actions of this other expert E2 as VDATA2. In the illustrated example the length of the video data stream VDATA2 is shorter than the audio data ADATA2 of the expert E2 and is followed by instruction data, in particular a machine data model MDM of the respective machine component handled by the second expert E2 during this procedure step. The training sequence or guiding sequence illustrated in Fig. 4 may be followed by acoustic data ADATA3 of a third expert E3 explaining a further procedural step without available video data. As can be seen, the training sequence or guiding sequence comprises series of audio data sets and/or video data sets concatenated or linked using procedure context data PCD. In a possible embodiment, the training sequence or guiding sequence for a procedure to be performed by a trainee T includes extracted audio data and/or extracted video data stored in the database 5 of the platform. The training or guiding sequence can be enriched by the processing unit 4A in a possible embodiment with instructional data loaded from the database 5 of the system for the respective procedure context data PCD. These instructional data used to enrich the training and/or guiding sequence can comprise data collected from different data sources including documentation data, machine data models, scanned data, recorded audio and/or video data of training and/or guiding sequences previously executed by a domain expert or trainee. The collected data can comprise data provided by different data sources including CAD models of machines M to be maintained, photographs or videos of real maintenance procedures and/or three-dimensional scans of special tools or parts. The CAD models of machines to be maintained comprise typically construction models, not necessarily designed for training. The CAD models can be simplified and converted into a format appropriate for training, e.g. by removing small parts or components from the model which are not visually relevant for the training process. This can be accomplished in a possible embodiment by an automatic model conversion and simplification process performed by the processing unit 4A of the server 4.

The data sources can also provide photographs or videos of real maintenance procedures. These can be available from previous live training sessions. Additional, non-VR documentation can be used such as sketches or slides. These documents can be converted automatically in a possible embodiment to images forming additional instructional data. Further, the data sources can comprise three-dimensional scans of special tools or parts. If special tools or parts are not available as CAD models, three-dimensional scans can be generated or created for these user parts from physical available parts using laser scanners or photogrammetric reconstructions.

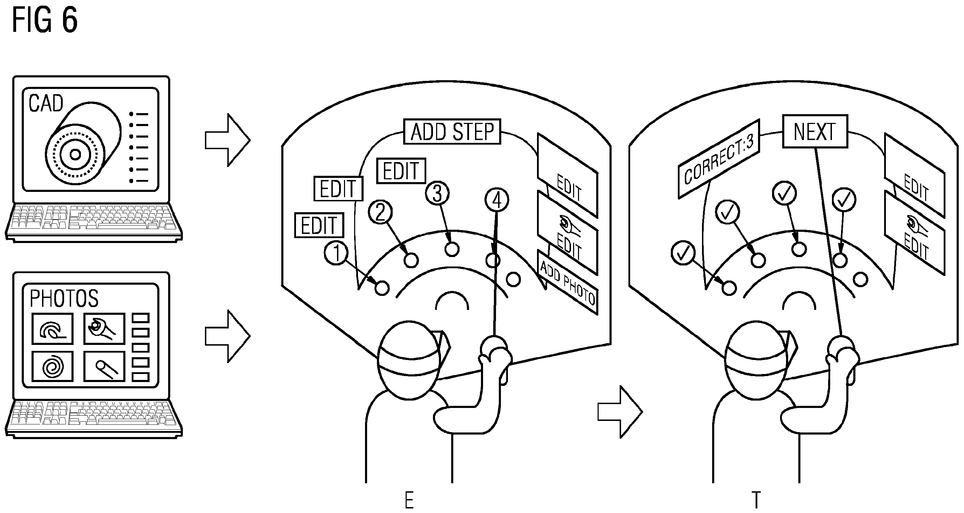

The pre-existing data such as CAD models or photographs, can be imported by the platform into a virtual reality VR training authoring system as also illustrated schematically in Fig. 6. Domain expert E can use the VR training authoring system which allows the domain expert E to specify the task procedures that the trainee T is supposed to learn, in particular within a virtual reality VR environment. The implemented authoring system can include in a possible embodiment a process of highlighting or selecting different parts of the imported CAD model or the scanned special tools in VR. A further function of the system 1 can be a process adapted to select pre-existing images or photographs from a set of images that has been imported by the system 1 from a data source. The system 1 can comprise a library stored in the database comprising predefined tools such as wrenches, screwdrivers, hammers etc. as well as ways of selecting them in virtual reality VR. The platform can also provide a function of specifying atomic actions or procedural steps in VR such as removing a specific screw, i.e. component of an object of interest, with a specific wrench, i.e. tool. The platform or system 1 further comprises in a possible embodiment, a function of creating sequences of actions, e.g. remove a first screw, then remove a second screw etc. forming part of a VR training session. The platform can further provide a function of arranging images, videos, sketches and or other non-virtual reality, VR, documentation data as supplementary data in helpful positions within the three-dimensional environment optionally associated with a specific procedural step in the sequence of actions forming the training session. The platform can further provide a function of saving a sequence of actions with added supporting photographs as a training and/or guiding sequence.

The trainee T can use the VR training authoring system provided by the platform. The system can allow to import a sequence of actions and arrangements of supporting images or photographs specified by a domain expert E in the authoring system making it available as a virtual reality, VR, training experience to the trainee T. The platform can provide a function of displaying a CAD model, specialized tools, standard tools and supporting photographs on the display unit of a computing device 3 worn by the trainee T in virtual reality VR. The trainee T can perform atomic actions in VR including a component manipulation such as removing a specific screw with a specific wrench. In the training mode, parts and tools to be used in each atomic action within the atomic action sequence of the training session can be highlighted by the platform. In a possible examination mode, parts or components of a machine M serviced by the trainee T are not highlighted but the trainee T can receive a feedback on whether the procedure step has been performed correctly or not by him.

Accordingly, in a possible embodiment the platform or system 1 can use a virtual reality, VR, based authoring system and automatic conversion of pre-existing data to create a virtual reality training session for a trainee T. The system 1 allows to break down a procedure that is supposed to be learned in the training into a sequence of atomic actions using specific parts of a CAD model, virtual tools and can be supported by auxiliary documentation.

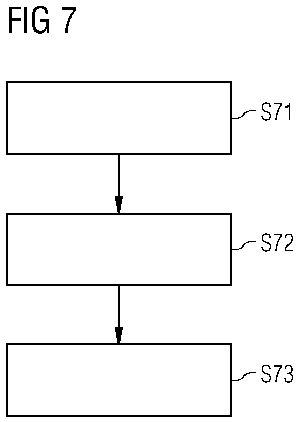

Fig. 7 shows a flowchart of a possible embodiment of a method for generating a virtual reality, VR, training session according to an aspect of the present invention.

As can be seen in the flowchart of Fig. 7, the method for generating a virtual reality, VR, training session according to an aspect of the present invention can comprise several main steps S71, S72, S73.

In a first step S71, a virtual reality, VR, data model of an object of interest is loaded from a database into a virtual reality, VR, authoring system. Such a virtual reality, VR, authoring system is illustrated in Fig. 6 in the middle and can be operated by a technical expert, E. The virtual reality, VR, authoring system can be used by the technical expert, E, for generating a virtual reality, VR, training session for a procedure to be performed by at least one trainee, T, on a physical object of interest in a technical environment. In a possible embodiment, the virtual reality, VR, data model of the object of interest can be derived automatically from an available computer-aided design, CAD, model of the physical object of interest as also illustrated in Fig. 6 or from a scam pf the object of interest. In a possible embodiment, the computer-aided design, CAD, data model of the physical object of interest can be converted or transformed automatically by a conversion unit of the virtual reality, VR, authoring system. The computer-aided design, CAD, model is a three-dimensional data model. In a preferred embodiment, the virtual reality, VR, model of the object of interest derived from the CAD model is a hierarchical data model representing a hierarchical structure of the physical object of interest consisting of a plurality of components. The physical object of interest can for instance comprise a machine consisting of subsystems where each subsystem has a plurality of interconnected components or machine parts. If special tools or parts are not available as CAD models, three-dimensional scans can be created of them from the actual physical parts using for instance laser scanners or photogrammetric reconstruction. The computer-aided design, CAD, model of the physical object of interest can for instance be stored in the database 5 of the system illustrated in Fig. 1 and converted automatically by the processing unit 4A into a virtual reality, VR, model of the object of interest, e.g. the respective machine.

In a further step S72, atomic procedure steps of the respective procedure are specified by a technical expert E using the training authoring system as also illustrated in Fig. 6. The technical expert E performs himself the specified atomic procedural steps in a virtual environment provided by the virtual reality, VR, authoring system on the loaded virtual reality, VR, data model of the object of interest. In a possible embodiment, the technical expert E performs one or more atomic procedural steps in the three-dimensional virtual environment provided by the virtual reality, VR, authoring system using virtual tools loaded also from the database into said virtual reality, VR, authoring system and selected by the technical expert E in the three-dimensional virtual environment for performing the respective atomic procedural steps. In a possible embodiment, the virtual tools used by the technical expert E in the three-dimensional virtual environment to perform the atomic procedural steps are derived also automatically from available computer-aided design, CAD, models of the respective tools. An atomic procedural step performed by the technical expert E in the three-dimensional virtual environment comprises a manipulation of at least one displayed virtual component of the object of interest with or without use of a virtual tool. The atomic procedural step can comprise for instance a moving of the displayed virtual component, a removing of the displayed virtual component, a replacing of the displayed virtual component by another virtual component, connecting a virtual component to a displayed virtual component and/or changing the displayed virtual component.

In a further step S73, the atomic procedural steps performed by the technical expert E in the virtual environment are recorded and the recorded atomic procedural steps are linked to generate automatically the virtual reality, VR, training session stored in the database where it is available for one or more trainees T.

In a possible embodiment, each recorded atomic procedural step performed by the technical expert E in the three-dimensional virtual reality, VR, environment is enriched with additional or supplementary data selected by the technical expert E in the three-dimensional virtual environment provided by the virtual reality, VR, authoring system. The supplementary data can be imported by the virtual reality, VR, authoring system from different data sources and/or databases selected by the expert E and linked to the recorded atomic procedural step. These supplementary data can comprise for instance photographs, instruction videos, audio recordings, sketches, slides, text documents and/or instruction manuals.

In a possible embodiment, each recorded atomic procedural step of a procedure is linked to at least one previously recorded procedural step of the same procedure by the technical expert E in the virtual environment by performing a corresponding linking input command. In a further possible embodiment, each recorded atomic procedural step of a procedure is linked to at least one previously recorded procedural step of the same procedure automatically depending on supplementary data selected by the technical expert E for the recorded atomic procedural steps.

After the virtual reality, VR, training session has been generated by the technical expert E using the virtual reality, VR, authoring system, the generated virtual reality, VR, training session can be stored in the database 5 of the system and can be made available to one or more trainees T to learn the procedure. The procedure can be for instance a repair or maintenance procedure to be performed on a physical machine of interest. The generated virtual reality, VR, training session stored in the database 5 of the virtual reality, VR, authoring system can be made available in a training operation mode to a virtual reality, VR, device of the trainee T. For instance, a trainee T can wear a virtual reality, VR, headset to have access to the stored training session. The virtual reality, VR, device such as a virtual reality, VR, headset or virtual reality, VR, goggles is adapted to display the atomic procedural steps of the stored training session to the respective trainee T who emulates the displayed atomic procedural steps of the training session also in a three-dimensional virtual environment provided by the virtual reality, VR, device of the trainee T as also illustrated in Fig. 6. The trainee T can explore the virtual reality, VR, machine model of the object of interest, i.e. machine, by attempting to take apart different components of the respective machine. In a possible embodiment, a recorded previously generated virtual reality, VR, training session stored in the database 5 can be downloaded by the virtual reality, VR, device of the trainee T to display the virtual reality, VR, session to the trainee T. In a further possible embodiment, a virtual reality, VR, training session generated by the expert E is applied to the trainee T online, i.e. when the expert E is still operating within the virtual environment. In this embodiment, both the trainee T and the technical expert E are both present in the virtual environment provided by the virtual reality, VR, training system at the same time and can interact with each other. For instance, the technical expert E can guide the trainee T by voice or pointing to parts or components during the virtual reality, VR, training session. The trainee T tries to copy or to emulate the manipulation of the object of interest or component of object of interest during the procedural step according to his abilities.

In a possible embodiment, the virtual reality, VR, authoring system can be switched between different operation modes. In a generation operation mode, the virtual reality, VR, authoring system can be used by a technical expert E to generate a virtual reality, VR, training session for any procedure of interest performed for any physical object of interest. The virtual reality, VR, authoring system can be switched to a training operation mode where a virtual reality, VR, device of the trainee T outputs the atomic procedural steps of the generated training session to the respective trainee T. The virtual reality, VR, training authoring system can also be switched to an examination operation mode. In the examination operation mode, the atomic procedural steps performed by the trainee T in the three-dimensional virtual environment provided by a virtual reality, VR, device are recorded and compared automatically with the recorded atomic procedural steps performed by the domain expert E in the three-dimensional virtual environment of the virtual reality, VR, authoring system. In the examination operation mode, the atomic procedural steps performed by the trainee T and the procedural steps performed by the domain expert E are compared with each other to generate comparison results which are evaluated to provide a feedback to the trainee T indicating to the trainee T whether the trainee T has performed the respective atomic procedural steps correctly or not. In a possible embodiment, the comparison results can be stored and evaluated to analyze a training progress of the trainee T. If the comparison results show that the procedural steps performed by the trainee T are identical or almost identical to the procedural steps performed by the technical expert E, the trainee T can be classified as a qualified trainee having the ability to perform the procedure on a real physical object of interest.

In a possible embodiment, the virtual reality, VR, training session stored in the database of the virtual reality, VR, authoring system can be made available to an augmented reality, AR, guiding device of a qualified trainee T which displays the virtual reality, VR, training session to the trainee T who emulates the displayed atomic procedural steps in the technical environment to perform the procedure on the physical object of interest, i.e. in the real world.

The procedural steps performed by the technical expert E or the trainee T in the three-dimensional virtual environment during the training operation mode and/or during the examination operation mode of the virtual reality, VR, authoring system can comprise any kind of manipulation of at least one displayed virtual component of the object of interest with or without use of any kind of virtual tool. The atomic procedural steps can for instance comprise moving the displayed virtual component, i.e. moving a component of the displayed virtual component from a first position in the three-dimensional virtual environment to a second position in the three-dimensional virtual environment. Further, the manipulation can comprise re-moving the displayed virtual component from the virtual environment. A further basic manipulation which can be performed in an atomic procedural step can comprise the replacement of a displayed virtual component by another virtual component. A further atomic procedural step can comprise the connection of a virtual component in the three-dimensional virtual environment to a displayed virtual component. Further, an atomic procedural step can comprise as a manipulation a change of a displayed virtual component, for instance change of a shape and/or material of a displayed virtual component.

The method for generating a virtual reality, VR, training session as illustrated in the flowchart of Fig. 7 has the significant advantage that no programming is required to create a specific training session. Once the virtual reality, VR, authoring system has been implemented, the domain expert E can use the virtual reality, VR, training authoring system to create any kinds of individual virtual reality, VR, training sessions without requiring any programming and without requiring any programming skills of the technical expert E.

The virtual reality, VR, training authoring system can be combined with a virtual reality, VR, telepresence system where the domain expert E acting as a trainer and multiple trainees T can virtually appear collocated within the system and where for instance the domain expert E can virtually point at parts of the virtual reality, VR, model of the respective object of interest and may even use voice communication to give guidance in real time during the execution of the virtual reality, VR, training session on a virtual reality, VR, device of a trainee T. The trainee T can also give a feedback during the execution by voice communication to the respective domain expert E.

In a possible embodiment, the trainee T performs the training session offline by downloading a prerecorded virtual reality, VR, training session stored in a database 5. In an alternative embodiment, the trainee T can perform the virtual reality, VR, training session online, i.e. communicating with the domain expert E bidirectional through a communication channel during the execution of the training session. In a possible embodiment, the virtual reality, VR, training system used by the trainee T can be switched between an online operation mode (with bidirectional communication with the domain expert E during the training session) and an offline training operation mode (performing the training session without interaction with the domain expert E). In a possible implementation, bidirectional communication during an online training session can also be performed in a virtual reality, VR, system, for instance a domain expert E can be represented by an Avatar moving in the virtual reality, VR, to give guidance to the trainee T in the virtual reality, VR. In a further possible implementation, the virtual representation of the technical domain expert E and/or the virtual representation of the technical trainee T can move freely in a virtual environment showing for instance a fabrication room of a facility including different physical objects of interest such as fabrication machines.

The virtual reality, VR, training system according to the present invention can be switched between an online training mode (with bidirectional communication with a technical domain expert E) and an offline training mode (without bidirectional communication with a technical domain expert E). In both operation modes, the trainee T can select between a normal training operation mode, an examination operation mode and/or a guiding operation mode where the trainee T emulates the displayed atomic procedural steps in the real technical environment to perform the learned procedure on the physical object of interest or machine. In a possible implementation, the guiding operation mode can only be activated if the trainee T has been authorized as a qualified trainee, i.e. having demonstrated that he made sufficient training progress to perform the procedure on the physical object of interest, e.g. the real-world machine in the technical environment. The training progress of any trainee T can be analyzed automatically on the basis of the comparison results generated in the examination operation mode. Further, the comparison results give a feedback to the author of the training session, i.e. the respective technical expert E whether the generated training session teaches the procedure to the trainees T efficiently. If the training process made by a plurality of trainees T is not sufficient, the domain expert E can amend the generated training session to achieve better training results.

The method for generating a virtual reality, VR, training session for a procedure to be performed on a physical object of interest can be combined with a system for sharing automatically procedural knowledge between domain experts E and trainees T according to the first aspect of the present invention. Observations of the domain expert E by performing an atomic procedural step can be evaluated automatically to generate automatically instructions for the trainee T supplied to the virtual reality, VR, device of the trainee T. In the online operation mode of the virtual reality, VR, authoring system, a virtual assistant can comprise an autonomous agent adapted to perform autonomously a dialog with the domain expert E and/or trainee T while performing the procedure.

In contrast to conventional systems, the platform 1 according to the present invention requires no programming to create a specific training session. Once the VR authoring system has been implemented, and once a basic playback virtual reality, VR, training system has been provided, domain experts E can use the VR training authoring system offered by the platform to create and generate automatically their own VR training sessions. This makes the training faster and more efficient.

The virtual reality, VR, system can be used not only as a VR training system but also as an augmented reality, AR, guidance system. The same data, including sequence of steps, photographs, CAD models and scanned three-dimensional models can be used to play back an appropriate sequence of actions to a trainee T in the field who is in the process of performing a real maintenance task on a real machine M.

In a further possible embodiment of the virtual reality, VR, system according to an aspect of the present invention, the system can create 360 degree videos of a maintenance work-flow. This can be useful as non-interactive training data. For example, a trainee T or worker can review the 360 degree video of a maintenance procedure in the field using a cardboard-style smartphone VR headset, just before actually performing the respective task or procedure.

In a still further possible embodiment, the virtual reality, VR, system can be combined with a VR telepresence system where a domain expert E can act as a trainer and multiple trainees T can then virtually appear collocated within the VR training system and the trainer E can virtually point at parts of the CAD model and may use voice communication to give guidance to the trainees T. In a still further possible embodiment, trainees T can record their own training sessions for personal review or review by an examiner or expert E.

## Claims

1. A method for generating a virtual reality, VR, training session for a procedure to be performed by at least one trainee, T, on a physical object of interest in a technical environment,
the method comprising the steps of:
(a) loading (S71) a virtual reality, VR, model of said object of interest from a database into a virtual reality, VR, authoring system;
(b) specifying (S72) atomic procedural steps of the respective procedure by a technical expert, E, and performing the specified atomic procedural steps in a virtual environment provided by the virtual reality, VR, authoring system by said technical expert, E, on the loaded virtual reality, VR, model of the object of interest; and
(c) recording (S73) the atomic procedural steps performed by the technical expert, E, in the virtual environment and linking the recorded atomic procedural steps to generate automatically the virtual reality, VR, training session stored in the database and available for the trainees, T.

2. The method according to claim 1 wherein each recorded atomic procedural step performed by the technical expert, E, in the three-dimensional virtual environment is enriched with supplementary data selected by the technical expert, E, in the three-dimensional virtual environment provided by said virtual reality, VR, authoring system.

3. The method according to claim 2 wherein the supplementary data is imported by said virtual reality, VR, authoring system from different data sources and/or databases and linked to the recorded atomic procedural step.

4. The method according to claim 2 or 3 wherein the supplementary data comprises photographs, instruction videos, audio recordings, sketches, slides, text documents and/or instruction manuals.

5. The method according to any of the preceding claims 1 to 4 wherein the technical expert, E, performs one or more atomic procedural steps in the three-dimensional virtual environment provided by the virtual reality, VR, authoring system using virtual tools loaded from a database into said virtual reality, VR, authoring system and selected by the technical expert, E, in the three-dimensional virtual environment for performing the respective atomic procedural steps.

6. The method according to any of the preceding claims 1 to 5 wherein each recorded atomic procedural step of a procedure is linked to at least one previously recorded procedural step of the same procedure by said technical expert, E, in the virtual environment or linked depending on the supplementary data selected by the technical expert, E, for the recorded atomic procedural step.

7. The method according to any of the preceding claims 1 to 6 wherein the generated virtual reality, VR, training session stored in the database of said virtual reality, VR, authoring system is made available in a training operation mode to a virtual reality, VR, device of the trainee, T, which displays the atomic procedural steps of the training session to the respective trainee, T, emulating the displayed atomic procedural steps of the training session in the three-dimensional virtual environment provided by the virtual reality, VR, device of the trainee, T.

8. The method according to any of the preceding claims 1 to 7 wherein in an examination operation mode, the atomic procedural steps performed by the trainee, T, in the three-dimensional virtual environment provided by its virtual reality, VR, device are recorded and compared automatically with the recorded atomic procedural steps performed by the domain expert, E, in the three-dimensional virtual environment of the virtual reality, VR, authoring system to generate comparison results and a feedback to the trainee, T, indicating whether the trainee, T, has performed the respective atomic procedural steps correctly or not.

9. The method according to claim 8 wherein the comparison results are stored and evaluated to analyze a training progress of the trainee, T.

10. The method according to any of the preceding claims 1 to 9 wherein the generated virtual reality, VR, training session stored in the database of said virtual reality, VR, authoring system is made available to an augmented reality, AR, guiding device of a qualified trainee, T, which displays the virtual reality, VR, training session to the trainee, T, who emulates the displayed atomic procedural steps in the technical environment to perform the procedure on the physical object of interest.

11. The method according to any of the preceding claims 1 to 10 wherein the virtual reality, VR, model of the object of interest is derived automatically from an available computer-aided design, CAD, model of the physical object of interest or from a scan of said physical object of interest.

12. The method according to any of the preceding claims 1 to 11, wherein the virtual reality, VR, model of the object of interest is a hierarchical data model representing the hierarchical structure of the physical object of interest consisting of a plurality of components.

13. The method according to any of the preceding claims 1 to 12 wherein virtual tools used by the technical expert, E, or trainee, T, in the three-dimensional virtual environment to perform atomic procedural steps are derived automatically from available computer-aided design, CAD, models of the respective tools.

14. The method according to any of the preceding claims 1 to 13 wherein the atomic procedural step performed by the technical expert, E, or the trainee, T, in the three-dimensional virtual environment comprises a manipulation of at least one displayed virtual component of the object of interest with or without use of a virtual tool, in particular moving the displayed virtual component, removing the displayed virtual component, replacing the displayed virtual component by another virtual component, connecting a virtual component to the displayed virtual component and/or changing the displayed virtual component.

15. A virtual reality, VR, authoring system for generating a virtual reality, VR, training session for a procedure to be performed by at least one trainee, T, on a physical object of interest,
said authoring system comprising a processing unit configured to perform the method according to any of the preceding claims 1 to 14.

## Amended claims

### Amended claims in accordance with Rule 137(2) EPC.

1. A method for generating a virtual reality, VR, training session for a procedure to be performed by at least one trainee, T, on a physical object of interest in a technical environment,
the method comprising the steps of:
(a) loading (S71) a virtual reality, VR, model of said object of interest from a database into a virtual reality, VR, authoring system;
(b) specifying (S72) atomic procedural steps of the respective procedure by a technical expert, E, and performing the specified atomic procedural steps in a virtual environment provided by the virtual reality, VR, authoring system by said technical expert, E, on the loaded virtual reality, VR, model of the object of interest; and
(c) recording (S73) the atomic procedural steps performed by the technical expert, E, in the virtual environment and linking the recorded atomic procedural steps to generate automatically the virtual reality, VR, training session stored in the database and available for the trainees, T,
wherein each recorded atomic procedural step performed by the technical expert, E, in the three-dimensional virtual environment is enriched with supplementary data selected by the technical expert, E, in the three-dimensional virtual environment provided by said virtual reality, VR, authoring system, and
wherein the supplementary data comprises photographs, instruction videos, audio recordings, sketches, slides, text documents and/or instruction manuals.

2. The method according to claim 1 wherein the supplementary data is imported by said virtual reality, VR, authoring system from different data sources and/or databases and linked to the recorded atomic procedural step.

3. The method according to claim 1 or 2 wherein the technical expert, E, performs one or more atomic procedural steps in the three-dimensional virtual environment provided by the virtual reality, VR, authoring system using virtual tools loaded from a database into said virtual reality, VR, authoring system and selected by the technical expert, E, in the three-dimensional virtual environment for performing the respective atomic procedural steps.

4. The method according to any of the preceding claims 1 to 3 wherein each recorded atomic procedural step of a procedure is linked to at least one previously recorded procedural step of the same procedure by said technical expert, E, in the virtual environment or linked depending on the supplementary data selected by the technical expert, E, for the recorded atomic procedural step.

5. The method according to any of the preceding claims 1 to 4 wherein the generated virtual reality, VR, training session stored in the database of said virtual reality, VR, authoring system is made available in a training operation mode to a virtual reality, VR, device of the trainee, T, which displays the atomic procedural steps of the training session to the respective trainee, T, emulating the displayed atomic procedural steps of the training session in the three-dimensional virtual environment provided by the virtual reality, VR, device of the trainee, T.

6. The method according to any of the preceding claims 1 to 5 wherein in an examination operation mode, the atomic procedural steps performed by the trainee, T, in the three-dimensional virtual environment provided by its virtual reality, VR, device are recorded and compared automatically with the recorded atomic procedural steps performed by the domain expert, E, in the three-dimensional virtual environment of the virtual reality, VR, authoring system to generate comparison results and a feedback to the trainee, T, indicating whether the trainee, T, has performed the respective atomic procedural steps correctly or not.

7. The method according to claim 6 wherein the comparison results are stored and evaluated to analyze a training progress of the trainee, T.

8. The method according to any of the preceding claims 1 to 7 wherein the generated virtual reality, VR, training session stored in the database of said virtual reality, VR, authoring system is made available to an augmented reality, AR, guiding device of a qualified trainee, T, which displays the virtual reality, VR, training session to the trainee, T, who emulates the displayed atomic procedural steps in the technical environment to perform the procedure on the physical object of interest.

9. The method according to any of the preceding claims 1 to 8 wherein the virtual reality, VR, model of the object of interest is derived automatically from an available computer-aided design, CAD, model of the physical object of interest or from a scan of said physical object of interest.

10. The method according to any of the preceding claims 1 to 9, wherein the virtual reality, VR, model of the object of interest is a hierarchical data model representing the hierarchical structure of the physical object of interest consisting of a plurality of components.

11. The method according to any of the preceding claims 1 to 10 wherein virtual tools used by the technical expert, E, or trainee, T, in the three-dimensional virtual environment to perform atomic procedural steps are derived automatically from available computer-aided design, CAD, models of the respective tools.

12. The method according to any of the preceding claims 1 to 11 wherein the atomic procedural step performed by the technical expert, E, or the trainee, T, in the three-dimensional virtual environment comprises a manipulation of at least one displayed virtual component of the object of interest with or without use of a virtual tool, in particular moving the displayed virtual component, removing the displayed virtual component, replacing the displayed virtual component by another virtual component, connecting a virtual component to the displayed virtual component and/or changing the displayed virtual component.

13. A virtual reality, VR, authoring system for generating a virtual reality, VR, training session for a procedure to be performed by at least one trainee, T, on a physical object of interest,
said authoring system comprising a processing unit configured to perform the method according to any of the preceding claims 1 to 12.
